# FASCICULE DE BREVET EUROPEEN

(11) **EP 4 028 866 B1**
(45) Date de publication et mention de la délivrance du brevet: **12.03.2025**
(21) Numéro de dépôt: 20786008.1
(22) Date de dépôt: 03.09.2020
(51) Int. Cl.: G06F 3/01, G09B 21/00, G06V 20/20

(54) **SYSTÈME D'AIDE À L'ORIENTATION**
ORIENTIERUNGSHILFSSYSTEM
ORIENTATION ASSISTANCE SYSTEM

(30) Priorité: 11.09.2019 FR 1910007
(43) Date de publication de la demande: 20.07.2022
(73) Titulaire: Artha France, 78000 Versailles (FR)
(72) Inventeur: DU CHALARD, Rémi, 78000 VERSAILLES (FR)
(74) Mandataire: IP Trust
(86) Numéro de dépôt international: PCT/FR2020/051528
(87) Numéro de publication internationale: WO 2021/048485

(56) Documents cités:
- US-A1- 2015 125 831
- US-A1- 2018 189 567

## Description

### Domaine de l'invention

La présente invention concerne le domaine de l'aide à l'orientation de personnes des personnes souffrant de déficiences visuelles ou de personnes se déplaçant dans des environnements de très faible visibilité, par exemple des pompiers se déplaçant dans un bâtiment enfumé ou des militaires se déplaçant dans l'obscurité.

On connaît différentes solutions, qui vont de l'assistance d'un chien-guide au marquage du sol par des bandes d'aide à l'orientation, l'implantation de balises sonores, ou encore de cannes permettant de détecter les obstacles.

Plus récemment, on a aussi développé des applications GPS permettant aux aveugles et aux malvoyants de gagner en autonomie dans leurs déplacements, en leur donnant les rues, les points d'intérêt qui s'y trouvent, les carrefours, les arrêts de bus... Elles permettent à l'utilisateur de l'application GPS de recevoir en temps réel, par une notification orale sur leur smartphone, des indications sur les horaires de bus, leur donne l'arrêt et les mène à bon port une fois descendu du transport. Au fur et à mesure de son parcours, une information ad hoc est fournie pour que l'utilisateur ne se perde pas, évite les obstacles, ne rencontre pas de difficultés, monte dans le bon bus.

On a aussi proposé d'utiliser la transmission d'information par un mode haptique, par exemple sous la forme d'un bracelet connecté. La technologie haptique utilise le sens du toucher pour faire passer une information. La société WearWorks propose un bracelet intelligent nommé "Wayband", pour guider les aveugles. L'utilisateur commence par télécharger une application sur un téléphone intelligent associée et énonce l'adresse souhaitée. Le bracelet relié à un système GPS guide l'utilisateur à destination. Quand l'utilisateur se trompe d'itinéraire, le bracelet vibre. Il cesse de vibrer une fois sur le droit chemin. Le langage tactile, sensible, plus intuitif et peu intrusif, soulage l'ouïe, sens sur-sollicité par les malvoyants.

Une autre solution commercialisée par la société SUNU concerne un bracelet utilisant les ondes hautes fréquences, afin de faciliter l'écholocalisation dans l'espace.

### État de la technique

On connaît dans l'état de la technique la demande de brevet US20180189567A1 concernant un système d'aide aux malvoyants comprenant une pluralité de caméras vidéo et une bande haptique portée par l'utilisateur comprenant une pluralité (deux ou plus) de transducteurs haptiques espacés à distance. Cette bande haptique est portée de telle sorte que les mains de l'utilisateur sont libres pour d'autres tâches. Le système utilise sa caméra vidéo, ses algorithmes de traitement en profondeur et ses algorithmes de reconnaissance d'objets (matériels et / ou logiciels) pour identifier un nombre limité d'objets importants pour la navigation. Les emplacements spatiaux de chaque objet jugé important sont fournis à l'utilisateur en faisant varier la sortie vers les transducteurs haptiques en conséquence. Le système est configuré pour identifier et signaler les objets en tant qu'objets génériques, objets identifiés, et les objets d'obstacles potentiels. Le système peut également éventuellement fournir des informations audio ou des informations d'affichage graphique tactile concernant ces objets également.

Cette solution n'est pas satisfaisante car les multiples transducteurs agissent sur différentes parties du corps, ce qui ne permet pas une compréhension intuitive et aisée des informations, et nécessite une grande attention pour distinguer les déformations des zones d'appui des transducteurs.

Le brevet US20150125831A1 décrit un autre exemple de solution comprenant un ensemble de caméras qui peuvent capturer une image avant, grâce à quoi l'image est traitée et utilisée pour sortir une représentation tridimensionnelle de l'image sur le réseau de broches tactiles. Cela permet de reconnaître des objets et des obstacles dans la zone située devant le dispositif, tandis que le réseau de broches peut également être déployé en tant que lecteur braille adaptatif. Un assemblage de broches spécifique est envisagé en utilisant un micro-moteur pas à pas, tandis que le système global fournit plusieurs fonctions pour les utilisateurs malvoyants, y compris des capacités de navigation, la reconnaissance faciale, la connexion à des réseaux sans fil et divers moyens d'entrée / sortie.

### Inconvénients de l'art antérieur

Les solutions de l'art antérieur ne sont pas adaptées à transmettre une information riche et compréhensible sur un environnement visuel, sous une forme tactile.

Les informations haptiques sont généralement trop sommaires et mal adaptées à la compréhension d'un environnement complexe d'une manière suffisamment complète pour constituer une réelle aide à l'orientation.

### Solution apportée par l'invention

Afin de remédier à ces inconvénients, la présente invention concerne selon son acception la plus générale un système d'aide à l'orientation conforme à la revendication 1.

Avantageusement, lesdits moyens d'acquisition sont constitués par au moins un capteur d'images apte à être porté par le porteur dudit bracelet et des moyens de traitement pour générer une carte numérique de profondeur. Ce capteur d'image peut être constitué par une caméra stéréoscopique ou une caméra unique avec un traitement des images consécutives pour déterminer une carte de profondeur, ou encore un scanner 3D ou un lidar pour fournir un nuage de points.

Selon un mode de mise en œuvre particulier, lesdits moyens de traitement de la représentation numérique sont calculés en fonction d'un modèle de représentation sélectionné à partir d'une série de modèles différenciés de représentation. Les différents modèles permettent de fournir des traitements adaptés à des contextes particuliers, par exemple la transmission d'information sur une trajectoire, ou une représentation haptique d'un environnement et de ses points d'intérêts, ou une perception des volumes environnants, et de permettre à l'utilisateur de sélection l'un de ces modes d'informations en fonction de ses besoins et de ses prédilections, ou encore d'automatiser la sélection par des algorithmes d'apprentissage.

Selon une variante le système comporte en outre un serveur apte à communiquer avec chacun des équipements individuels pour recevoir les données géolocalisées d'acquisition de l'environnement numérique et d'enregistrement d'un modèle numérique géolocalisé dudit environnement, et pour transmettre ledit modèle numérique à un équipement individuel en fonction de sa position.

Cette variante permet de réduire les traitements de calcul à partir des images acquises et de mutualiser les informations utiles entre les différents utilisateurs.

Selon un mode de mise en œuvre particulier, lesdits moyens de traitement de la représentation numérique sont configurés pour extraire périodiquement une séquence de motifs numériques d'activation impulsionnel successifs d'un sous-ensemble des picots de ladite zone haptique, pour fournir une information haptique progressive pendant un intervalle temporel.

Selon une variante, l'un desdits motifs numériques consiste en une commande d'activation impulsionnelle d'un alignement de picots, formant avec un axe de référence dudit bracelet un angle correspondant à la direction de déplacement par rapport à la direction de référence dudit environnement visuel.

Selon une autre variante, l'un desdits motifs numériques consiste en une commande d'activation impulsionnelle d'une configuration de picots correspondant à une projection dans le plan horizontal des points d'intérêts principaux de ladite représentation numérique dudit environnement visuel.

Selon un mode de mise en œuvre particulier, le modèle de motif numérique d'activation impulsionnel d'un sous-ensemble des picots de ladite zone haptique est déterminé en fonction de l'appartenance de l'environnement visuel à une classe d'environnements pré-enregistrée.

Avantageusement, le modèle de motif numérique d'activation impulsionnel d'un sous-ensemble des picots de ladite zone haptique est déterminé en fonction du niveau d'expérience de l'utilisateur.

### Description détaillée d'un exemple non limitatif de l'invention

La présente invention sera mieux comprise à la lecture de la description détaillée d'un exemple non limitatif de l'invention qui suit, se référant aux dessins annexés où :
[Fig. 1] La figure 1 représente une vue schématique de l'invention
[Fig. 2] La figure 2 représente une vue de la surface intérieure du bracelet selon l'invention

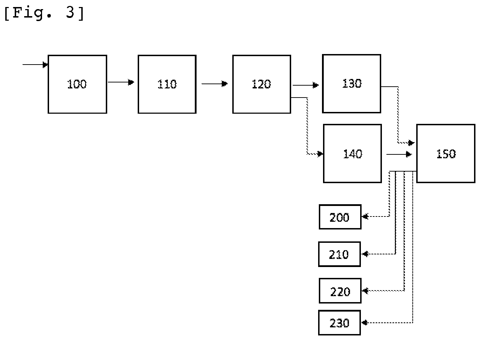

[Fig. 3] La figure 3 représente l'architecture fonctionnelle Description générale de l'architecture matérielle

Les composants individuels du système selon l'invention comprennent un bracelet (1) porté sur l'avant-bras de l'utilisateur, ou éventuellement en position fémorale, une monture (2), dans l'exemple décrit sous la forme d'une monture de lunettes, munie de capteurs d'images, par exemple dans le prolongement de chaque branche pour fournir une image stéréoscopique. La monture (2) est munie d'un capteur de géoréférencement ou de géolocalisation, et/ou un module fournissant une indication de l'orientation de la monture par rapport au Nord magnétique.

Ces différents éléments communiquent en mode Bluetooth BLE avec le téléphone intelligent (3) de l'utilisateur avec lequel ils sont appairés. Ce téléphone intelligent (3) assure une partie des traitements informatiques par l'intermédiaire d'une application et la communication avec un serveur via une communication radiofréquence de type 3G, 4G ou 5G. ou wifi. Bien entendu, le téléphone (3) peut être remplacé par un ordinateur, une tablette, et plus généralement un calculateur. Présentation du bracelet

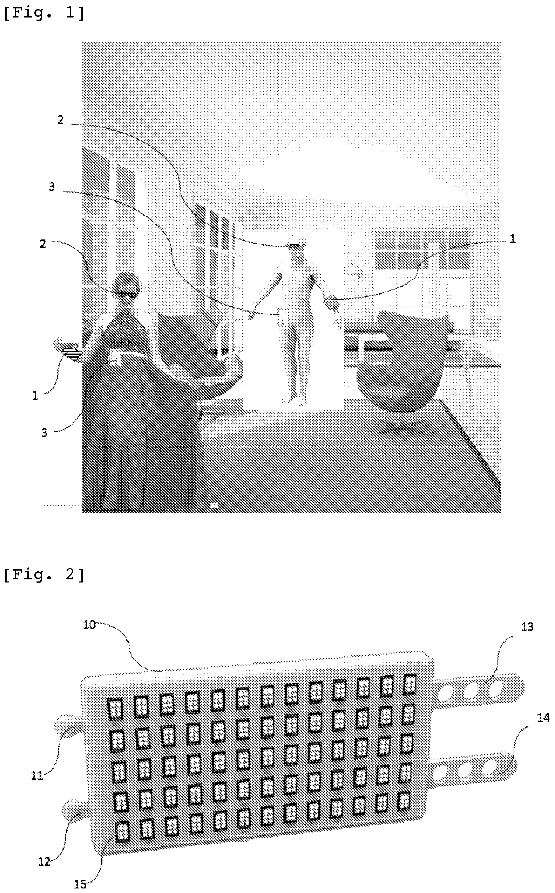

La figure 2 représente une vue d'un exemple de réalisation d'un bracelet pour la mise en œuvre de l'invention.

Il est constitué par une coque souple (10) munis de courroies (11, 12, 13, 14) pour la fixation autour de l'avant-bras (ou éventuellement autour de la zone lombaire).

Il comporte une matrice de 5x12 picots (15) activable chacun de manière impulsionnelle entre une position rentrée au repos, et en érection impulsionnelle pendant une fraction de seconde en cas d'activation d'un actionneur électromagnétique par un signal électrique.

La configuration de cette surface haptique n'est pas limitée à une zone rectangulaire avec une répartition régulière des picots (15).

### Traitements numériques

La première étape (100) consiste à acquérir deux flux d'images synchronisées à l'aide de deux capteurs décalés latéralement, sur la monture (2) de l'utilisateur.

Ce couple de capteurs forme une caméra stéréoscopique caméra orientée vers la scène que l'utilisateur pourrait voir.

Cette caméra est connectée par une liaison radiofréquence au téléphone intelligent (3) comportant une unité de calcul permettant le traitement (110) des images provenant des deux capteurs. Ce traitement permet de calculer la carte de profondeur à partir des deux images, ainsi que la position de la caméra dans l'espace. La caméra peut également être reliée à un ordinateur ou un téléphone intelligeant via une liaison sans fil, (bluetooth, WIFI,...) ou filaire.

Un traitement d'images possible est une succession d'algorithme permettant d'extraire la cartographie de profondeur de la scène puis d'utiliser ce résultat avec les images associées gauche et droite pour en déduire le changement de position et d'orientation de la caméra entre deux instants consécutifs de prise de vue (typiquement séparés d'un soixantième de seconde).

Deux processus interviennent ensuite.

Tout d'abord un module logiciel (120) commande l'enregistrement d'images ou de caractéristiques visibles constituant des points d'intérêts, et l'enregistrement en mémoire de la position de la monture (2) à l'instant de l'observation de ces points. Ce module fournit une base de données de points d'intérêt qui est transmises par le téléphone (3) de l'utilisateur à un serveur, qui enregistre ces données géolocalisées dans une base de données partagée entre tous les utilisateurs.

Le déclenchement d'un enregistrement d'une nouvelle entrée dans la base ainsi constituée a lieu de façon préférentielle en fonction d'un critère de recouvrement qui détermine la quantité d'information redondante avec les autres entrées de la base. D'autres critères peuvent être utilisés tel que le déclenchement manuel d'un enregistrement par l'utilisateur, le calcul d'une distance physique entre chaque position des points d'intérêt ou un laps de temps écoulé entre deux enregistrements.

Une base de données E1 est ainsi construite. Elle contient un ensemble de positions de référence associées à des caractéristiques ou images. Elle sert également, pendant l'utilisation d'un système dans la même zone, à relocaliser la monture (2).

Parallèlement, un module logiciel (140) calcule une carte de profondeur et les paramètres du système stéréoscopique sont utilisés pour générer un nuage de points, en projetant chaque pixel de l'image afin d'obtenir des coordonnées de points dans l'espace. Les points dans l'espace subissent ensuite un changement de repère en utilisant les informations relatives à la position du casque dans l'espace issues du module C1 d'odométrie afin de placer tous les points captés au cours de la phase d'initialisation dans un repère commun fixe.

Ces ensembles de points sont fusionnés afin de créer un modèle dense (cartographie) de la zone d'opération tout en réduisant la quantité d'informations redondantes.

Ce processus peut se faire par exemple en parcourant les ensembles de points et en fusionnant les points identifiés comme étant proches les uns des autres en fonction d'une distance ou encore en utilisant un volume de fonction de distance signée tronquée (Truncated Signed Distance Function - TSDF- Volume).

Une étape ultérieure (150) consiste à générer un maillage dans l'ensemble de points en trois dimensions. Ce maillage est constitué de triangles reliés, modélisant les surfaces de la zone d'opérations.

Cet ensemble de points (voxels) fait ensuite l'objet de traitements pour calculer des motifs d'activation des picots (15) du bracelet (1).

Pour cela, le système comporte une bibliothèque de traitements différents.

Un premier traitement (200) consiste à déterminer une direction de déplacement ou une trajectoire simplifiée, sous forme de segments consécutifs, calculés en fonction des voxels correspondant à des obstacles, et dont l'orientation est recalculée par rapport à la direction de la monture (2). Le résultat est un motif d'activation des picots, recalculé périodiquement, par exemple une fois par seconde, pour transmettre de manière haptique la direction ou la trajectoire à suivre.

Un deuxième traitement (210) consiste à calculer une projection sur un plan horizontal des voxels pour déterminer une carte numérique à basse résolution (résolution conforme au nombre de picots), et à appliquer au bracelet des motifs impulsionnels correspondant à cette carte, orientée en fonction de la direction de la monture (2).

Un troisième traitement (220) consiste à calculer des plans transversaux consécutifs, et à transmettre des séquences de motifs correspondant à des plans transversaux de basse résolution, avec une succession temporelle représentatif de l'espacement selon l'axe longitudinal, perpendiculaire à ces plans transversaux. On applique ainsi aux picots des salves de motifs espacés par des intervalles de repos, qui permettent à l'utilisateur de percevoir par la succession de sensations tactiles la conformation de son environnement.

Un quatrième traitement (230) consiste à calculer une image basse définition en noir et blanc de l'image stéréoscopique, et à calculer un motif en fonction de cette image basse définition pour commander l'activation périodique des picots (15).

La sélection de l'un des modes de traitement (200 à 230) est réalisée soit par l'utilisateur, par une commande manuelle ou vocale. Elle peut aussi être réalisée de manière automatique, en fonction du type d'environnement (densité d'obstacle, environnement déjà connu vs. environnement nouveau, ...), ou en fonction du niveau d'apprentissage de l'utilisateur, certains des modes de traitement nécessitant une plus grande sensibilité et expérience que d'autres.

Selon une variante, l'ordinateur bracelet sera connecté par câble, Bluetooth ou wifi. La connexion de l'ordinateur aux serveurs se fera en wifi ou en 3G, 4G ou 5G.

## Revendications

1. - Système d'aide à l'orientation comprenant des moyens d'acquisition d'un environnement visuel réel ou virtuel, des moyens d'interface homme-machine non visuelle présentant une zone haptique unique d'une surface comprise entre 60x60 millimètres et 150x150 millimètres et des moyens de traitement de la représentation numérique dudit environnement visuel pour fournir un signal électrique de commande d'une interface non visuelle
- lesdits moyens d'interface homme-machine sont constitués par un bracelet, avec un ensemble de picots actifs de NxM ou N est compris entre 5 et 100 et M est compris entre 10 et 100, chacun desdits picots étant activable de manière impulsionnelle entre une position rentrée au repos, et en érection impulsionnelle pendant une fraction de seconde en cas d'activation d'un actionneur électromagnétique par un signal électrique le système étant **caractérisé en ce que**
lesdits moyens de traitement de la représentation numérique comprennent un traitement consistant à extraire périodiquement au moins un motif numérique d'activation impulsionnel d'un sous-ensemble des picots de ladite zone haptique, pour calculer des plans transversaux consécutifs, et à transmettre des séquences de motifs correspondant à des plans transversaux de basse résolution, avec une succession temporelle représentatif de l'espacement selon l'axe longitudinal, perpendiculaire à ces plans transversaux pour permettre à l'utilisateur de percevoir par la succession de sensations tactiles la conformation de son environnement.

2. - Système d'aide à l'orientation selon la revendication 1 **caractérisé en ce que** lesdits moyens de traitement de la représentation numérique comprennent en outre une bibliothèque de traitements différents :
- -Un premier traitement (200) consistant à déterminer une direction de déplacement ou une trajectoire simplifiée, sous forme de segments consécutifs, calculés en fonction des voxels correspondant à des obstacles, et dont l'orientation est recalculée par rapport à la direction de la monture (2) pour transmettre de manière haptique la direction ou la trajectoire à suivre
- -Un deuxième traitement (210) consistant à calculer une projection sur un plan horizontal des voxels pour déterminer une carte numérique à basse résolution (résolution conforme au nombre de picots), et à appliquer au bracelet des motifs impulsionnels correspondant à cette carte, orientée en fonction de la direction de la monture (2)
- Un troisième traitement (230) consistant à calculer une image basse définition en noir et blanc de l'image stéréoscopique, et à calculer un motif en fonction de cette image basse définition pour commander l'activation périodique des picots (15).

3. - Système d'aide à l'orientation selon la revendication 1 **caractérisé en ce que** lesdits moyens d'acquisition sont constitués par au moins un capteur d'images apte à être porté par le porteur dudit bracelet et des moyens de traitement pour générer une carte numérique de profondeur.

4. - Système d'aide à l'orientation selon l'une des revendications précédentes **caractérisé en ce qu'**il comporte en outre un serveur apte à communiquer avec chacun des équipements individuels pour recevoir les données géolocalisées d'acquisition de l'environnement numérique et d'enregistrement d'un modèle numérique géolocalisé dudit environnement, et pour transmettre ledit modèle numérique à un équipement individuel en fonction de sa position.

5. - Système d'aide à l'orientation selon l'une des revendications précédentes caractérisé en ce lesdits moyens de traitement de la représentation numérique sont configurés pour extraire périodiquement une séquence de motifs numériques d'activation impulsionnel successifs d'un sous-ensemble des picots de ladite zone haptique, pour fournir une information haptique progressive pendant un intervalle temporel.

6. - Système d'aide à l'orientation selon l'une des revendications précédentes **caractérisé en ce que** l'un desdits motifs numériques consiste en une commande d'activation impulsionnelle d'un alignement de picots, formant avec un axe de référence dudit bracelet un angle correspondant à la direction de déplacement par rapport à la direction de référence dudit environnement visuel.

7. - Système d'aide à l'orientation selon l'une des revendications précédentes **caractérisé en ce que** l'un desdits motifs numériques consiste en une commande d'activation impulsionnelle d'une configuration de picots correspondant à une projection dans le plan horizontal des points d'intérêts principaux de ladite représentation numérique dudit environnement visuel.

8. - Système d'aide à l'orientation selon l'une des revendications précédentes **caractérisé en ce que** le modèle de motif numérique d'activation impulsionnel d'un sous-ensemble des picots de ladite zone haptique est déterminé en fonction de l'appartenance de l'environnement visuel à une classe d'environnements pré-enregistrée.

9. - Système d'aide à l'orientation selon l'une des revendications précédentes **caractérisé en ce que** le modèle de motif numérique d'activation impulsionnel d'un sous-ensemble des picots de ladite zone haptique est déterminé en fonction du niveau d'expérience de l'utilisateur.

## Patentansprüche

1. - Orientierungshilfesystem, umfassend Mittel zur Erfassung einer realen oder virtuellen visuellen Umgebung, Mittel für eine nicht visuelle Mensch-Maschine-Schnittstelle, die eine einzige haptische Zone mit einer Oberfläche zwischen 60x60 Millimetern und 150x150 Millimetern aufweist, und Mittel zur Verarbeitung der digitalen Darstellung der visuellen Umgebung, um ein elektrisches Steuersignal für eine nicht visuelle Schnittstelle bereitzustellen
- wobei die Mensch-Maschine-Schnittstellenmittel aus einem Armband mit einer Menge aktiver Noppen von NxM bestehen, wobei N zwischen 5 und 100 liegt und M zwischen 10 und 100 liegt, wobei jede der Noppen impulsweise zwischen einer zurückgezogenen Ruheposition und einer impulsweise aufrecht stehenden Position für einen Bruchteil einer Sekunde bei Aktivierung eines elektromagnetischen Aktuators durch ein elektrisches Signal aktivierbar ist, wobei das System **dadurch gekennzeichnet ist, dass**
die Mittel zur Verarbeitung der digitalen Darstellung eine Verarbeitung umfassen, die darin besteht, periodisch mindestens ein digitales Muster der Impulsaktivierung einer Teilmenge der Noppen der haptischen Zone zu extrahieren, um aufeinanderfolgende Querebenen zu berechnen, und den Querebenen mit niedriger Auflösung entsprechende Mustersequenzen mit einer zeitlichen Abfolge zu übertragen, die für den Abstand entlang der Längsachse senkrecht zu diesen Querebenen repräsentativ ist, um es dem Benutzer zu ermöglichen, durch die Abfolge von taktilen Empfindungen die Gestalt seiner Umgebung wahrzunehmen.

2. - Orientierungshilfesystem nach Anspruch 1,
**dadurch gekennzeichnet, dass** die Mittel zur Verarbeitung der digitalen Darstellung ferner eine Bibliothek mit verschiedenen Verarbeitungen umfassen:
- Eine erste Verarbeitung (200), die darin besteht, eine vereinfachte Bewegungsrichtung oder Trajektorie in Form von aufeinanderfolgenden Segmenten zu bestimmen, die in Abhängigkeit von Hindernissen entsprechenden Voxeln berechnet werden und deren Orientierung in Bezug auf die Richtung der Fassung (2) neu berechnet wird, um die zu befolgende Richtung oder Trajektorie haptisch zu übertragen
- Eine zweite Verarbeitung (210), die darin besteht, eine Projektion der Voxel auf eine horizontale Ebene zu berechnen, um eine digitale Karte mit niedriger Auflösung (Auflösung entsprechend der Anzahl der Noppen) zu bestimmen und auf das Armband impulsförmige Muster zu übertragen, die dieser in Abhängigkeit von der Richtung der Fassung (2) ausgerichteten Karte entsprechen
- Eine dritte Verarbeitung (230), die darin besteht, ein niedrigauflösendes Schwarz-Weiß-Bild des stereoskopischen Bildes zu berechnen und ein Muster in Abhängigkeit von diesem niedrigauflösenden Bild zu berechnen, um die periodische Aktivierung der Noppen (15) zu steuern.

3. - Orientierungshilfesystem nach Anspruch 1,
**dadurch gekennzeichnet, dass** die Erfassungsmittel aus mindestens einem Bildsensor, der geeignet ist, vom Träger des Armbands getragen zu werden, und aus Verarbeitungsmitteln bestehen, um eine digitale Tiefenkarte zu erzeugen.

4. - Orientierungshilfesystem nach einem der vorstehenden Ansprüche, **dadurch gekennzeichnet, dass** es ferner einen Server umfasst, der geeignet ist, mit jedem der persönlichen Geräte zu kommunizieren, um die geolokalisierten Daten zur Erfassung der digitalen Umgebung und zur Speicherung eines geolokalisierten digitalen Modells der Umgebung zu empfangen und um das digitale Modell an ein persönliches Gerät in Abhängigkeit von seiner Position zu übertragen.

5. - Orientierungshilfesystem nach einem der vorstehenden Ansprüche, **dadurch gekennzeichnet, dass** die Mittel zur Verarbeitung der digitalen Darstellung dazu konfiguriert sind, periodisch eine Sequenz von aufeinanderfolgenden digitalen Impulsaktivierungsmustern einer Teilmenge der Noppen der haptischen Zone zu extrahieren, um während eines zeitlichen Intervalls eine progressive haptische Information bereitzustellen.

6. - Orientierungshilfesystem nach einem der vorstehenden Ansprüche, **dadurch gekennzeichnet, dass** eines der digitalen Muster aus einem Befehl zur Impulsaktivierung einer Ausrichtung von Noppen besteht, die mit einer Referenzachse des Armbands einen Winkel bilden, der der Bewegungsrichtung in Bezug auf die Referenzrichtung der visuellen Umgebung entspricht.

7. - Orientierungshilfesystem nach einem der vorstehenden Ansprüche, **dadurch gekennzeichnet, dass** eines der digitalen Muster aus einem Befehl zur Impulsaktivierung einer Noppenkonfiguration besteht, die einer Projektion der wichtigsten Punkte von Interesse der digitalen Darstellung der visuellen Umgebung in der horizontalen Ebene entspricht.

8. - Orientierungshilfesystem nach einem der vorstehenden Ansprüche, **dadurch gekennzeichnet, dass** das Modell des digitalen Musters der Impulsaktivierung einer Teilmenge der Noppen der haptischen Zone in Abhängigkeit von der Zugehörigkeit der visuellen Umgebung zu einer zuvor abgespeicherten Klasse von Umgebungen bestimmt wird.

9. - Orientierungshilfesystem nach einem der vorstehenden Ansprüche, **dadurch gekennzeichnet, dass** das Modell des digitalen Musters der Impulsaktivierung einer Teilmenge der Noppen der haptischen Zone in Abhängigkeit vom Erfahrungsgrad des Benutzers bestimmt wird.

## Claims

1. Orientation assistance system comprising means for acquiring a real or virtual visual environment, means for a non-visual human-machine interface which have a single haptic zone with a surface area of between 60x60 millimeters and 150x150 millimeters, and means for processing the digital representation of the visual environment, to provide an electrical control signal of a non-visual interface
- the human-machine interface means consisting of a bracelet with a set of active studs of NxM, where N is between 5 and 100 and M is between 10 and 100, each of the studs being activatable in a pulsed manner between a retracted position at rest and a pulsed erect position for a fraction of a second in the case of an electromagnetic actuator being activated by an electrical signal, the system being **characterized in that**
the means for processing the digital representation comprise processing consisting in periodically extracting at least one digital pattern for pulse activation from a subset of the studs of the haptic zone, to calculate consecutive transverse planes, and in transmitting sequences of patterns corresponding to low-resolution transverse planes with a time succession representative of the spacing along the longitudinal axis, which is perpendicular to these transverse planes, to allow the user to perceive by the succession of tactile sensations the shape of their environment.

2. Orientation assistance system according to claim 1, **characterized in that** the means for processing the digital representation further comprise a library of different types of processing:
- a first type of processing (200) consisting in determining a direction of travel or a simplified trajectory in the form of consecutive segments which are calculated on the basis of voxels corresponding to obstacles, and the orientation of which is recalculated with respect to the direction of the frame (2), in order to haptically transmit the direction or trajectory to be followed
- a second type of processing (210) consisting in calculating a projection of the voxels onto a horizontal plane to determine a low-resolution digital map (resolution in accordance with the number of studs), and applying pulse patterns to the bracelet which correspond to this map which is oriented on the basis of the direction of the frame (2)
- a third type of processing (230) consisting in calculating a low-definition black-and-white image of the stereoscopic image and calculating a pattern based on this low-definition image, in order to control the periodic activation of the studs (15).

3. Orientation assistance system according to claim 1, **characterized in that** the acquisition means consist of at least one image sensor capable of being worn by the wearer of the bracelet, and processing means, in order to generate a digital depth map.

4. Orientation assistance system according to any of the preceding claims, **characterized in that** it further comprises a server able to communicate with each of the individual pieces of equipment in order to receive the geolocalized data for acquiring the digital environment and for recording a geolocalized digital model of the environment, and to transmit the digital model to a personal piece of equipment based on its position.

5. Orientation assistance system according to any of the preceding claims, **characterized in that** the means for processing the digital representation are configured to periodically extract a sequence of successive digital patterns for pulse activation from a subset of the studs of the haptic zone to provide progressive haptic information over a time interval.

6. Orientation assistance system according to any of the preceding claims, **characterized in that** one of the digital patterns consists of a pulse activation command for the alignment of studs, which with a reference axis of the bracelet forms an angle corresponding to the direction of movement with respect to the reference direction in the visual environment.

7. Orientation assistance system according to any of the preceding claims, **characterized in that** one of the digital patterns consists of a pulse activation command for a stud configuration, which corresponds to a projection in the horizontal plane of the main points of interest of the digital representation in the visual environment.

8. Orientation assistance system according to any of the preceding claims, **characterized in that** the model of the digital pattern for activating the pulse of a subset of the studs of the haptic zone is determined on the basis of whether the visual environment belongs to a pre-recorded class of environments.

9. Orientation assistance system according to any of the preceding claims, **characterized in that** the model of the digital pattern for activating the pulse of a subset of the studs of the haptic zone is determined on the basis of the user's level of experience.
